# EUROPEAN PATENT APPLICATION

(11) **EP 2 472 929 A1**
(43) Date of publication of application: **04.07.2012**
(21) Application number: 10788892.7
(22) Date of filing: 10.06.2010
(51) Int. Cl.: H04W 12/06

(54) **METHOD AND SYSTEM FOR ORDER RELATIONSHIP AUTHENTICATION, AND MOBILE MULTIMEDIA BROADCASTING-CONDITIONAL ACCESS SYSTEM**

(30) Priority: 10.10.2009 CN 200910110633
(71) Applicant: ZTE Corporation, Shenzhen, Guangdong 518057 (CN)
(72) Inventor: KE, Zunyou, Shenzhen City Guangdong Province 518057 (CN)
(74) Representative: Novagraaf Technologies
(86) International application number: PCT/CN2010/073775
(87) International publication number: WO 2010/145496

(57) **Abstract**

A method for order relationship authentication, including: a visited mobile multimedia broadcasting-conditional access system (MMB-CAS) acquiring operation and management information from a corresponding business operating support system (BOSS); the visited MMB-CAS receiving a request message for accessing service key from a user and triggering order relationship authentication; the visited MMB-CAS requesting the home MMB-CAS to perform order relationship authentication on the user; and the visited MMB-CAS receiving an order relationship authentication result of the user fed back from the home MMB-CAS, and performing corresponding processing. The present invention also provides an order relationship authentication system and a Mobile Multimedia Broadcasting-Conditional Access System. By the present invention, the amount of data synchronized between MMB-CASs is reduced and the overall performance and reliability of the system is improved.

## Description

### Technical Field

The present invention relates to the field of mobile multimedia broadcasting technologies, and more especially, to a method and system for order relationship authentication and a mobile multimedia broadcasting-conditional access system.

### Background of the Related Art

In the China Mobile Multimedia Broadcasting (CMMB), the mobile multimedia broadcasting-conditional access system (MMB-CAS) is responsible for authenticating the order relationship of the user service. In the MMB-CAS, the central service transmits the encrypted short term through satellite, and lands the stream in the regional platform, that is, the central MMB-CAS only encrypts the Short Term Key (STK) of the central service. Provincial services are landed in the cities, and city scramblers are used to encrypt the short term. The order relationship authentication generally occurs when the user accesses to the service key, or any other scene needed by the operator.

In order to support the order relationship authentication of the roaming users, the visited MMB-CAS needs to cooperate with the home MMB-CAS and other network elements to achieve that in the distributed constructed system. The method currently used in the related art is that the visited MMB-CAS and the home MMB-CAS synchronize the order relationship data, however, the defects of this method are: both the visited MMB-CAS and the home MMB-CAS save the user's order relationship data, since the amount of synchronized data is large, the overall performance and reliability of the system are reduced.

### Summary of the Invention

The main technical problems to be solved in the invention is to overcome the defects in the related art, provide a method and system for order relationship authentication, and a mobile multimedia broadcasting-conditional access system, to reduce the synchronized data amount between the MMB-CASs, and to enhance overall performance and reliability of the system.

To solve the aforementioned technical problem, the present invention provides a method for order relationship authentication, comprising the steps:
a visited mobile multimedia broadcasting-conditional access system (MMB-CAS) acquiring operation and management information from a corresponding business operating support system (BOSS);
the visited MMB-CAS receiving a request message for accessing service key from a user and triggering order relationship authentication;
the visited MMB-CAS requesting the home MMB-CAS to perform order relationship authentication on the user; and
the visited MMB-CAS receiving an order relationship authentication result of the user fed back from the home MMB-CAS, and performing corresponding processing.

Before the step that the visited MMB-CAS requests the home MMB-CAS to perform the order relationship authentication on the user, said method also comprises:
the visited MMB-CAS queries a package or package list corresponding to the service used by the user, and then sends a user ID and a package or package list corresponding to the service used by the user to the home MMB-CAS.

Before the step of accessing to the operation and management information, said method also comprises:
before the step of accessing to the operation and management information, said method also comprises that the visited MMB-CAS and other regional business platform's MMB-CAS synchronize the service key.

The step of synchronizing the service key comprises:
The MMB-CAS of a region in which the service is located generates a corresponding service key and, synchronizes the key to other provincial MMB-CASs and the central MMB-CAS.

In the step of the MMB-CAS of a region in which the service is located generating the corresponding service key, the corresponding relationship between each province code, city ID, service channel ID, service key ID and service key is also generated;
in the step of synchronizing the key to the other provincial MMB-CASs and the central MMB-CAS, the corresponding relationship between the province code, the city ID, the service channel ID, the service key ID and the service key is also synchronized to other provincial MMB-CASs and the central MMB-CAS.

The operation and management information comprises: user information, order relationship information, package information and service information.

The user information is information of users attributing to a present province; the order relationship information is order information of users attributing to the present province; the service information is service information of the present province and cities in the present province; the package information is package information of the centre, the present province and the cities in the present province.

Said request message for acquiring the service key comprises: service key ID, user ID and home province code.

For non-roaming users, the visited MMB-CAS and the home MMB-CAS are the same one MMB-CAS;
for a centralized built system, the visited MMB-CAS and the home MMB-CAS are the same one MMB-CAS.

A system for order relationship authentication comprises:
a mobile multimedia broadcasting-conditional access system, which is set to: synchronize operation and management information from a business operating support system;
the business operating support system, which is connected with the mobile multimedia broadcasting-conditional access system and is set to: acquire electronic service guide information from an electronic service guide system, configure package, manage a user as well as order relationship information of the user, and synchronize the operation and management information to the mobile multimedia broadcasting conditional access system; and
the electronic service guide system, which is connected with the business operating support system and is set to: manage the electronic service guide information, and synchronize the electronic service guide information to the business operations support system.

The system also comprises:
a mobile terminal, which is set to: receive and display the electronic service guide information, request the mobile multimedia broadcasting services in two-way, and display the service content.

The operation and management information comprises: user information, order relationship information, package information and service information.

A mobile multimedia broadcasting conditional access system comprises:
a user's key management module, which is set to: synchronize user information and order relationship information from a business operating support system corresponding to a mobile multimedia broadcasting-conditional access system, when the mobile multimedia broadcasting conditional access system is the home mobile multimedia broadcasting conditional access system, manage the user information and the order relationship information, acquire a user key from a service key generator module, and use the user key to encrypt a service key;
the service key generator module, which is connected with the user's key management module and is set to: synchronize package information and service information from the business operating support system corresponding to the mobile multimedia broadcasting-conditional access system, generate and update the service key, synchronize the service key to the user's key management module, as well as use the service key to encrypt a short term key according to a request from a short term management and generator module, and send the encrypted short term key to the short term management and generator module; and
the short term management and generator module is connected with the service key generator module and is set to: acquire the short term key, request the service key generator module to encrypt the short term key, and then encapsulate the encrypted short term key.

The mobile multimedia broadcasting-conditional access system also comprises:
a service key collector module, which is connected with the service key generator module and is set to: synchronize the service key generated by the service key generator module to multimedia broadcasting-conditional access systems in other provinces.

When the mobile multimedia broadcasting-conditional access system is a home mobile multimedia broadcasting-conditional access system, the user's key management module is also set to: manage the user information and the order relationship information.

Compared with the related art, the user information, the package information, the service information, the order relationship information and so on of the central MMB-CAS and the provincial MMB-CAS in the present invention are acquired by synchronization from the corresponding central BOSS and the provincial BOSS, and the user information and the order relationship are only managed in the user's home MMB-CAS, thus reducing the synchronized data amount between the MMB-CASs and enhancing the overall performance and reliability of the system.

### Brief Description of Drawings

FIG. 1 is a structural block diagram of the system for order relationship authentication provided in an example of the present invention.
FIG. 2 is a principle block diagram of an MMB-CAS provided in an example of the present invention.
FIG. 3 is a flow chart of a method for order relationship authentication provided in an example of the present invention.

### Preferred Embodiments of the Present Invention

The present invention will be described in further detail below with combination of specific examples and the accompanying drawings.

The main idea of the present invention is: user information, package information, service information, and the order relationship of the central MMB-CAS and the provincial MMB-CASs are acquired by synchronization from the central BOSS the provincial BOSS, the user information and the order relationship are only managed in the user's home MMB-CAS, thus reducing the synchronization data amount between the MMB-CASs and enhancing the overall performance and reliability of the system.

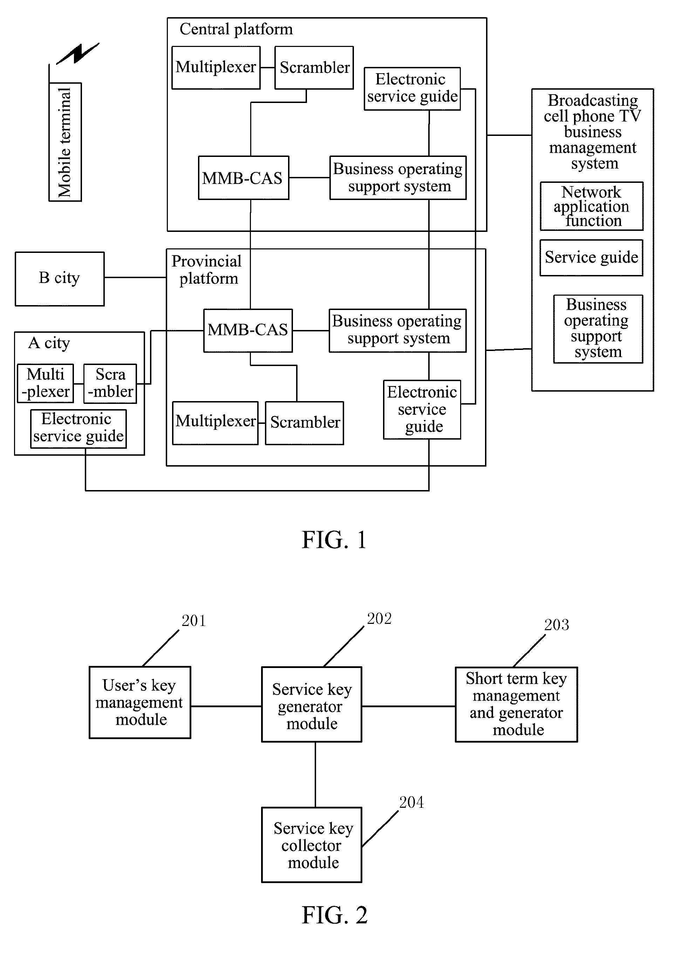

Please refer to FIG. 1 which is a structure block diagram of the order relationship authentication system provided in an example of the present invention, the system comprises:
the mobile multimedia broadcasting-conditional access system (MMB-CAS), which is set to: achieve control of authorization management and reception of mobile multimedia broadcasting service, synchronize the electronic service guide information, the package information, the user information, and its order relationship information from the business operating support system;
the business operating support system (BOSS), which is connected with the mobile multimedia broadcasting-conditional access system and is set to: access to the electronic service guide information, configure the package, synchronize the electronic service guide information and the package information to the MMB-CAS, manage the user information and the user's order relationship information, and synchronize the information to the MMB-CAS;
the Electronic Service Guide (ESG) system, which is connected with the business operating support system and is set to: manage and synchronize the electronic service guide information to the BOSS.

Furthermore, the order relationship authentication system also comprises:
a mobile terminal, which is set to: receive and display the electronic service guide information, request the mobile multimedia broadcasting service in two-way, and display the service content.

In the distributed constructed system, there are city nodes, provincial nodes and center node deployed for the MMB-CAS, BOSS and ESG.

Please refer to FIG. 2 that is a block diagram of the MMB-CAS provided in an embodiment of the present invention, comprising:
the user's key management module 201, which is set to: synchronize the user information and the order relationship information, acquire the user key (UK), acquire the service key from the service key generator module 202, and use the user key to encrypt the service key;
the service key generator module 202, which is connected with the user's key management module 201 and is set to: synchronize the package information and the service information, generate, update and synchronize the service key (SK), and use the SK to encrypt the short term key, and send the encrypted short term key to the short term key management and generator module 203; that is, the service key generator module is set to: synchronize the package information and the service information from the business & operation support system corresponding to the mobile multimedia broadcasting conditional access system, generate and update the service key, and synchronize the SK to the user's key management module, as well as use the service key to encrypt the short term key according to the request of the short term management and generator module, and send the encrypted short term key to the short term management and generator module; and
the short term management and generator (STKMG) module 203 is connected with the service key generator module 202 and is set to: acquire the short term key, request the service key generator module 202 to encrypt the short term key, and then encapsulate the encrypted short term key.

In the example of the present invention, the short term key is generated by the scrambler.

Furthermore, the MMB-CAS also comprises:
the service key collector module 204, which is connected with the service key generator module and is set to: synchronize the service key generated by the service key generator module 202 to other provinces' mobile multimedia broadcasting-conditional access systems.

When the mobile multimedia broadcasting-conditional access system is the home mobile multimedia broadcasting-conditional access system, the user's key management module is also set to: manage the user information and the order relationship information.

The MMB-CAS in this example might be either the central MMB-CAS or the provincial MMB-CAS.

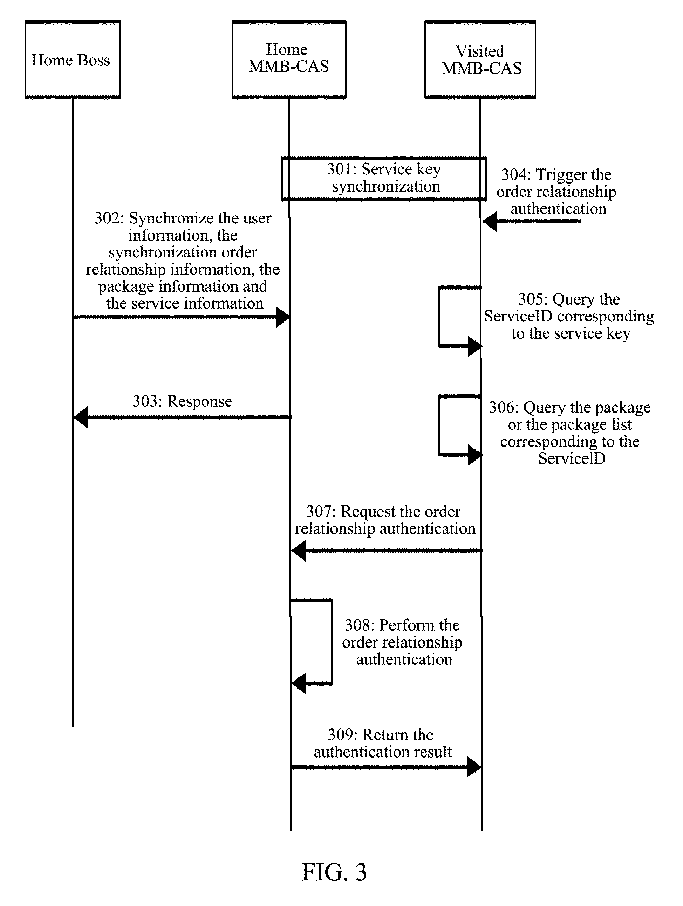

Please refer to FIG. 3 that is a flow chart of the method for order relationship authentication provided in an example of the present invention, and the method comprises the following steps.

In step 301, the visited MMB-CAS and other regional service platform's MMB-CAS synchronize the service key.

In the example of the present invention, either the visited MMB-CAS or the home MMB-CAS generates the corresponding service key and synchronizes the service key to other provinces' MMB-CASs and the central MMB-CAS. Specifically, the MMB-CAS of the region where the service is located generates the corresponding service key and synchronizes the service key to other provinces' MMB-CASs and the central MMB-CAS.

The method for each MMB-CAS synchronizing the SK comprises:
the central MMB-CAS acquiring the central service channel information, and if there is new service released, the central MMB-CAS generating the corresponding SK and synchronizing the key to each province's MMB-CAS.

When the provincial MMB-CAS acquires the service information of its own province or the cities of the province, if there is new service released, the MMB-CAS generates a corresponding SK, and synchronizes the key to other provinces' MMB-CASs and the central MMB-CAS;
for monthly services, the system configures the time for regularly generating a new SK in each month. The central MMB-CAS generates a new SK for the central service and initiates the SK synchronization; each province MMB-CAS generates a new SK for the service of the present province and the cities in the province and initiates a SK synchronization.

When the MMB-CAS generates and synchronizes the SK, it also generates and synchronizes RegionID, CityID, ServiceID, SKID and its corresponding relationship with the SK.

Wherein, the ServiceID is the unique service channel ID in a CMMB broadcasting network; the SKID is the SK identifier and is unique in the entire network; the CityID is the identifier of each city broadcasting network and is unique in the entire network; the RegionID is the province code, which might be the administrative Region ID of the capital cities (or municipalities) and is unique in the entire network.

In step 302, the home MMB-CAS acquires the operation and management information from the corresponding BOSS.

Wherein, the operation and management information comprises: the user information, the synchronization order relationship information, the package information and the service information.

The provincial MMB-CAS acquires the province's user information, the provincial users' order relationship information, the province's and the provincial cities' service information, the package information of the centre, province and cities in the province from the provincial BOSS. It does not need to synchronize the user order relationship information between the provincial MMB-CASs.

The central MMB-CAS acquires the central service information and the central package information from the central BOSS.

In step 303, the home MMB-CAS returns a response to the home BOSS.

In step 304, the visited MMB-CAS receives a request message for accessing to the service key from the user and triggers the order relationship authentication.

For example, the visited MMB-CAS receives a service key request message sent from the Network Application Function (NAF) of the China mobile cell phone TV business platform, and the service key request message comprises the service key identifier (SKID), the user ID (CMMBSN), the code of the home province (HomeRegionID), and so on.

In step 305, the visited MMB-CAS queries the ServiceID corresponding to the SKID.

In step 306, the visited MMB-CAS queries the package or the package list corresponding to the ServicelD.

In step 307, the visited MMB-CAS, according to the HomeRegionID, queries the IP corresponding to the home MMB-CAS and requests the home MMB-CAS to perform the order relationship authentication, and the carried parameters comprise the CMMBSN and the abovementioned package or the package list.

In step 308, the home MMB-CAS performs the order relationship authentication according to the request.

In the example of the present invention, a service might be included in multiple packages, and when performing the order relationship authentication, the authentication is considered to be passed as long as the service is included in a certain package ordered by the user.

In step 309, the home MMB-CAS replies the response of the order relationship authentication result to the visited MMB-CAS.

The visited MMB-CAS takes different processing according to the authentication results.

For non-roaming users, the visited MMB-CAS and the home MMB-CAS are the same network element object, that is, the whole process of order relationship authentication is completed in the home MMB-CAS.

For the centralized established system, the visited MMB-CAS and the home MMB-CAS are also the same network element object, that is to say, there is only one MMB-CAS, and the whole process of order relationship authentication is completed in the MMB-CAS.

The above content is the further detail description of the present invention with combination of the specific examples, and it is not intended to limit the specific implementation of the present invention to the description. For those skilled in the art, a number of simple deductions or replacements can be made without departing from the concept of the present invention, and these deductions and replacements should all belong to the protection scope of the present invention.

### Industrial Applicability

The user information, the package information, the service information, and the order relationship information and so on of the central MMB-CAS and the provincial MMB-CASs are acquired by synchronization from the corresponding central BOSS and the provincial BOSS in the present invention, and the user information and the order relationship are only managed in the user's home MMB-CAS, thus reducing the synchronized data amount between the MMB-CASs and enhancing the overall performance and reliability of the system.

## Claims

1. A method for order relationship authentication, comprising:
a visited mobile multimedia broadcasting-conditional access system (MMB-CAS) acquiring operation and management information from a corresponding business operating support system (BOSS);
the visited MMB-CAS receiving a request message for accessing service key from a user and triggering order relationship authentication;
the visited MMB-CAS requesting the home MMB-CAS to perform order relationship authentication on the user; and
the visited MMB-CAS receiving an order relationship authentication result of the user fed back from the home MMB-CAS, and performing corresponding processing.

2. The method of claim 1, wherein, before the step that the visited MMB-CAS requests the home MMB-CAS to perform order relationship authentication on the user, said method also comprises:
the visited MMB-CAS querying a package or package list corresponding to a service used by the user, and then sending a user ID and the package or package list corresponding to the service used by the user to the home MMB-CAS.

3. The method of claim 1 or 2, wherein, before the step of accessing to the operation and management information, said method also comprises:
the visited MMB-CAS and a MMB-CAS of other regional business platform synchronizing the service key.

4. The method of claim 3, wherein, the step of synchronizing the service key comprises:
the MMB-CAS of a region in which the service is located generating a corresponding service key and synchronizing the corresponding service key to other provincial MMB-CASs and the central MMB-CAS.

5. The method of claim 4, wherein:
in the step of the MMB-CAS of a region in which the service is located generating the corresponding service key, a corresponding relationship between each province code, city identifier, service channel identifier, service key identifier and service key is also generated;
in the step of synchronizing the corresponding service key to the other provincial MMB-CASs and the central MMB-CAS, the corresponding relationship between the province code, the city identifier, the service channel identifier, the service key identifier and the service key is also synchronized to other provincial MMB-CASs and the central MMB-CAS.

6. The method of claim 1, wherein:
the operation and management information comprises: user information, order relationship information, package information and service information.

7. The method of claim 6, wherein:
the user information is information of users attributing to a present province; the order relationship information is order information of users attributing to the present province;
the service information is service information of the present province and cities in the present province;
the package information is package information of a centre, the present province and the cities in the present province.

8. The method of claim 1, wherein:
said request message for acquiring the service key comprises: service key identifier, user identifier and home province code.

9. The method of claim 1 or 2, wherein:
for non-roaming users, the visited MMB-CAS and the home MMB-CAS are the same one MMB-CAS;
for a centralized established system, the visited MMB-CAS and the home MMB-CAS are the same one MMB-CAS.

10. A system for order relationship authentication, comprising:
a mobile multimedia broadcasting-conditional access system, which is set to: synchronize operation and management information from a business operating support system;
the business operating support system, which is connected with the mobile multimedia broadcasting-conditional access system and is set to: acquire electronic service guide information from an electronic service guide system, configure package, manage a user as well as order relationship information of the user, and synchronize the operation and management information to the mobile multimedia broadcasting conditional access system; and
the electronic service guide system, which is connected with the business operating support system and is set to: manage the electronic service guide information, and synchronize the electronic service guide information to the business operations support system.

11. The system of claim 10, wherein, the system also comprises:
a mobile terminal, which is set to: receive and display the electronic service guide information, request the mobile multimedia broadcasting services in two-way, and display service content.

12. The system of claim 10, wherein:
the operation and management information comprises: user information, order relationship information, package information and service information;
when the mobile multimedia broadcasting-conditional access system is a home mobile multimedia broadcasting-conditional access system, the mobile multimedia broadcasting-conditional access system is also set to manage the user information and the order relationship information.

13. A mobile multimedia broadcasting-conditional access system, comprising:
a user's key management module, which is set to: synchronize user information and order relationship information from a business operating support system corresponding to a mobile multimedia broadcasting-conditional access system, , acquire a user key from a service key generator module, and use the user key to encrypt a service key;
the service key generator module, which is connected with the user's key management module and is set to: synchronize package information and service information from the business operating support system corresponding to the mobile multimedia broadcasting-conditional access system, generate and update the service key, synchronize the service key to the user's key management module, as well as use the service key to encrypt a short term key according to a request from a short term management and generator module, and send the encrypted short term key to the short term management and generator module; and
the short term management and generator module is connected with the service key generator module and is set to: acquire the short term key, request the service key generator module to encrypt the short term key, and then encapsulate the encrypted short term key.

14. The mobile multimedia broadcasting-conditional access system of claim 13, wherein, the mobile multimedia broadcasting-conditional access system also comprises:
a service key collector module, which is connected with the service key generator module and is set to: synchronize the service key generated by the service key generator module to multimedia broadcasting-conditional access systems in other provinces.

15. The mobile multimedia broadcasting-conditional access system of claim 13, wherein:
when the mobile multimedia broadcasting-conditional access system is a home mobile multimedia broadcasting-conditional access system, the user's key management module is also set to: manage the user information and the order relationship information.
